# EUROPÄISCHE PATENTSCHRIFT

(11) **EP 2 397 711 B1**
(45) Veröffentlichungstag und Bekanntmachung des Hinweises auf die Patenterteilung: **09.01.2013**
(21) Anmeldenummer: 10166640.2
(22) Anmeldetag: 21.06.2010
(51) Int. Cl.: F16C 29/04, F16C 29/12, F16C 29/00, F16C 43/04, B23Q 1/26

(54) **Linearführung und Verfahren zum Montieren eines Lineartisches**
Linear guide and method for mounting same
Guidage linéaire et procédé de montage d'une table linéaire

(43) Veröffentlichungstag der Anmeldung: 21.12.2011
(73) Patentinhaber: AB SKF, 415 50 Göteborg (SE)
(72) Erfinder: Andersson, Leif A., 97711 Maßbach (DE)
(74) Vertreter: Schonecke, Mitja

(56) Entgegenhaltungen:
- DE-A1- 4 109 286
- DE-A1- 19 609 596
- FR-A1- 2 544 034
- US-A- 206 648
- US-A- 2 789 675

## Beschreibung

Die Erfindung betrifft eine Linearführung und ein Verfahren zum Montieren eines Lineartisches.

Linearführungen bzw. Schienenführungen weisen einen Innenkörper (Mittelschiene), zwei Außenkörper (Außenschienen) und Wälzkörper auf, von denen einige auf dem einen Außenkörper und dem Innenkörper und die restlichen auf dem Innenkörper und dem anderen Außenkörper abwälzen. Konventionelle Linearführungen werden mit Zustellschrauben montiert, um eine Vorspannung zwischen den Außenkörper und dem Innenkörper zu erhalten. Außerdem werden konventionelle Linearführungen als Einzelteile für eine nachfolgende Montage geliefert.

Die US 206,648 offenbart eine solche Linearführung, die mittels eines Rahmens und Schrauben zusammen gehalten wird. Mittels der Schrauben werden die Außenkörper gegen den Innenkörper gedrückt.

Die DE 196 09 596 A1 offenbart ein spieleinstellbares Linearlager mit einer profilierten Führungsschiene, an deren beiden parallelen Längsseiten Laufbahnen ausgebildet sind. Das Linearlager weist ferner zwei parallele, an den Längsseiten der Führungsschiene angeordnete, miteinander zu einem Tragkörper verbundene Führungskassetten auf, die sich an den Laufbahnen der Führungsschiene längsverschieblich abstützen. Zwischen den beiden Führungskassetten sind zwei Verbindungsstege in einem Abstand voneinander angeordnet. Auf den Tragkörper ist ein im Querschnitt U-förmiges Vorspannblech aufgesteckt, dessen Steg die beiden Gleitführungskassetten und die Verbindungsstege des Tragkörpers abdeckt und dessen Schenkel an den Außenseiten der Gleitführungskassetten federnd anliegen.

Die US 2,789,675 offenbart einen Transportschlitten einer Schreibmaschine.

Die Aufgabe der Erfindung ist es, eine Linearführung anzugeben, die eine vereinfachte nachfolgende Montage erlaubt.

Die Aufgabe der Erfindung wird gelöst durch eine Linearführung, aufweisend einen Innenkörper, einen ersten Außenkörper, einen zweiten Außenkörper, zwischen dem Innenkörper und dem ersten Außenkörper angeordnete erste Wälzkörper, zwischen dem Innenkörper und dem zweiten Außenkörper angeordnete zweite Wälzkörper und wenigstens eine vorgespannte Klammer, die die beiden Außenkörper seitlich gegen die relevanten Wälzkörper drückt, wobei die wenigstens eine Klammer eine auf ihrer dem ersten Außenkörper abgewandten Seite in Richtung der Längsausdehnung des ersten Außenkörpers sich erstreckende erste Aufnahme aufweist, die eingerichtet ist, eine längliche, erste Fixiervorrichtung aufzunehmen, und/oder die eine auf ihrer dem zweiten Außenkörper abgewandten Seite in Richtung der Längsausdehnung des zweiten Außenkörpers sich erstreckende zweite Aufnahme aufweist, die eingerichtet ist, eine längliche, zweite Fixiervorrichtung aufzunehmen. Aufgrund der erfindungsgemäßen Verwendung der vorgespannten Klammer, die als Federelement seitlich gegen die Außenkörper drückt bzw. dadurch die Außenkörper gegen die Wälzlager drücken, ist es nicht nötig, die erfindungsgemäße Linearführung im unverbauten bzw. unmontierten Zustand als Einzelteile zu liefern, da die Klammer die Bestandteile der erfindungsgemäßen Linearführung zusammen hält. Auch kann die Klammer die gegebenenfalls notwendige Grundvorspannung zwischen den Außenkörpern und dem Innenkörper erzeugen, wodurch auf die Zustellschrauben konventioneller Linearführungen verzichtet werden kann.

Die Klammer der erfindungsgemäßen Linearführung weist demnach die auf ihrer dem ersten Außenkörper abgewandten Seite in Richtung der Längsausdehnung des ersten Außenkörpers sich erstreckende erste Aufnahme auf, die eingerichtet ist, die längliche, insbesondere kreiszylinderförmige erste Fixiervorrichtung aufzunehmen. Alternativ oder zusätzlich kann die wenigstens eine Klammer auch die auf ihrer dem zweiten Außenkörper abgewandten Seite in Richtung der Längsausdehnung des zweiten Außenkörpers sich erstreckende zweite Aufnahme aufweisen, die eingerichtet ist, die längliche, insbesondere kreiszylinderförmige zweite Fixiervorrichtung aufzunehmen. Die erste und/oder zweite Aufnahme kann insbesondere in dem Bereich, in dem die Klammer gegen den relevanten Außenkörper drückt, angeordnet sein. Die Fixiervorrichtungen sind z.B. als Draht ausgebildet und drücken im verbauten Zustand der erfindungsgemäßen Linearführung gegen die Klammer, um diese zu fixieren, wodurch die Drähte eine Sicherheitsfunktion ausüben. Die Aufnahme können z.B. durch geeignetes Biegen der freien Enden hergestellt werden. So kann z.B. das relevante freie Ende geschwungen gebogen sein.

Es kann genau eine vorgespannte Klammer vorgesehen sein, die die beiden Außenkörper seitlich gegen die Wälzkörper drückt. Die genau eine Klammer kann sich insbesondere im Wesentlichen über die gesamte Länge der beiden Außenkörper bzw. über die gesamte Länge der erfindungsgemäßen Linearführung erstrecken. Dadurch ergibt sich eine über die gesamte Länge der Außenkörper anliegende Grundspannung hervorgerufen durch die vorgespannte Klammer.

Es können aber auch mehrere Klammern vorgesehen sein, die die beiden Außenkörper seitlich gegen die Wälzkörper drücken. Dadurch kann Material eingespart werden. Die mehreren Klammern können insbesondere entlang der Längsausdehnung der Außenkörper hintereinander angeordnet sein. Die Klammern können beispielsweise im Wesentlichen äquidistant voneinander beabstandet sein und/oder sich zusammen im Wesentlichen über die gesamte Länge der beiden Außenkörper erstrecken.

Die wenigstens eine Klammer kann vorzugsweise aus einem Federblech z.B. durch geeignetes Biegen und gegebenenfalls anschließendes Härten hergestellt werden. Das Federblech kann vorzugsweise aus Stahl oder Aluminium ausgeführt sein. Für eine Montage der erfindungsgemäßen Linearführung zusammen mit der wenigstens einen Klammer können Öffnungen bzw. Löcher in das Federblech gestanzt sein.

Nach einer Ausführungsform der erfindungsgemäßen Linearführung weist wenigstens einer der Außenkörper auf seiner nach außen gerichteten Außenfläche wenigstens eine Vertiefung auf, in die die wenigstens eine Klammer insbesondere mit einem ihrer freien Ende eingerastet ist. Dadurch kann die Gefahr eines unerwünschten Abspringens oder Verrutschens der Klammer z.B. während des Transports der erfindungsgemäßen Linearführung oder während der Montage einer Vorrichtung, die die erfindungsgemäße Linearführung umfasst, wenn nicht gar verhindert, so doch zumindest verringert werden. Die Vertiefung kann in relativ einfacher Weise als eine längs der Längsausdehnung des relevanten Außenkörpers sich erstreckende Nut ausgeführt sein. Diese Nut lässt sich z.B. in relativ einfacher Weise durch Fräsen herstellen. Die Nut kann dann wie ein Schnappprofil wirken, in das die Klammer einhakt bzw. einschnappt. Für eine verbesserte Verhakung kann das relevante freie Ende der Klammer z.B. wulstartig ausgeführt oder in Richtung der Außenseite des relevanten Außenkörpers gebogen sein.

Linearführungen werden u.A. bei Patientenliegen, insbesondere bei Operationstischen verbaut, um den Operationstisch, auf dem z.B. ein zu behandelndes Lebewesen liegt oder sitzt, währen eines Eingriffs linear zu verschieben. Ein Aspekt der Erfindung betrifft daher einen Lineartisch, aufweisend die erfindungsgemäße Linearführung, eine an dem Innenkörper befestigte Befestigungsvorrichtung und eine an den Außenkörpern befestigte Tischplatte. Der Lineartisch ist insbesondere als eine Patientenliege oder ein Operationstisch ausgeführt.

Die Tischplatte des erfindungsgemäßen Lineartisches kann zumindest teilweise seitlich über wenigsten eine der Außenkörper gestülpt sein. Dann ist es möglich, dass zwischen dem über den relevanten Außenkörper gestülpten Teil der Tischplatte und der Klammer die längliche, in Richtung der Längsausdehnung des relevanten Außenkörpers sich erstreckende und insbesondere kreiszylinderförmige Fixiervorrichtung eingeklemmt ist, die gegen die Klammer drückt. Die Fixiervorrichtung, die z.B. ein Draht ist, kann gegebenenfalls von der oder den Aufnahmen der Klammer gehalten werden.

Um z.B. die Gefahr eines Verrutschens der Fixiervorrichtung zu verringern oder gar zu verhindern, weist der über den relevanten Außenkörper gestülpte Teil der Tischplatte eine in Richtung der Längsausdehnung des relevanten Außenkörpers sich erstreckende, in der dem relevanten Außenkörper zugewandten Seite der Tischplatte angeordnete Aufnahme auf, die die Fixiervorrichtung aufnimmt. Die Aufnahme kann z.B. als Nut ausgeführt sein, die relativ einfach z.B. durch Fräsen erzeugt werden kann.

Ein weiterer Aspekt der Erfindung betrifft ein Verfahren zum Montieren des erfindungsgemäßen Lineartisches, aufweisend den Verfahrensschritt des Befestigen des Innenkörpers an der Befestigungsvorrichtung und des Befestigen der Tischplatte an den Außenkörpern.

Zusätzlich kann das erfindungsgemäße Verfahren folgenden Verfahrensschritt aufweisen: Einführen einer länglichen, insbesondere kreiszylinderförmigen ersten Fixiervorrichtung zwischen der Tischplatte und dem Teil der Klammer, der gegen den ersten Außenkörper drückt und/oder Einführen einer länglichen, insbesondere kreiszylinderförmigen zweiten Fixiervorrichtung zwischen der Tischplatte und dem Teil der Klammer, der gegen den zweiten Außenkörper drückt.

Die erfindungsgemäße Linearführung kann den Vorteil haben, dass der Montageaufwand für eine die Linearführung umfassende Vorrichtung, wie z.B. den erfindungsgemäßen Lineartisch, verringert wird. Außerdem ist die Vorspannung auf die Außenkörper bereits voreingestellt und gegebenenfalls für eine Mehrzahl im Wesentlichen gleich ausgeführter erfindungsgemäßer Linearführungen im Wesentlichen gleich. Wird die Fixiervorrichtung verwendet, dann kann beispielsweise die Anzahl von Befestigungsbohrungen verringert werden.

Ausführungsbeispiele von Linearführungen sind in den beigefügten schematischen Zeichnungen dargestellt. Es zeigen:
- Fig. 1: eine Linearführung in einer geschnittenen Darstellung, nicht gemäß vorliegender Erfindung,
- Fig. 2: die Linearführung in einer perspektivischen Darstellung,
- Fig. 3: eine weitere Linearführung in einer perspektivischen Darstellung, nicht gemäß vorliegender Erfindung,
- Fig. 4: eine Linearführung der Erfindung, in geschnittener Darstellung und
- Fig. 5: eine Patientenliege.

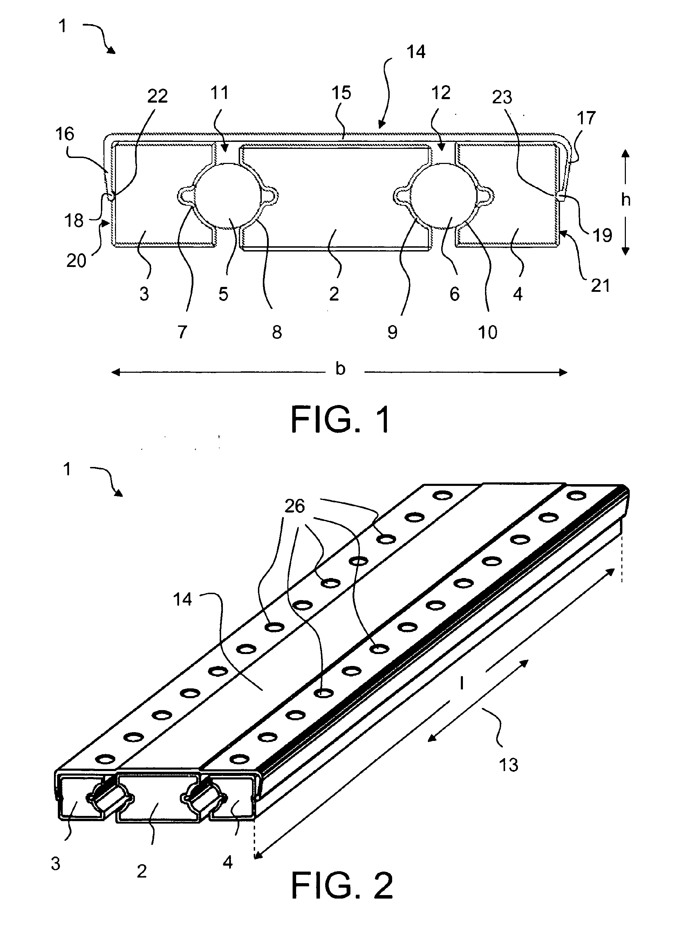

Die Figuren 1 und 2 zeigen eine Schienenführung bzw. eine Linearführung 1, die eine Mittelschiene bzw. einen länglichen Innenkörper 2, eine erste Außenschiene bzw. einen länglichen ersten Außenkörper 3 und eine zweite Außenschiene bzw. einen länglichen zweiten Außenkörper 4 aufweist. Die Fig. 1 zeigt eine Frontansicht der Linearführung 1 in geschnittener Darstellung und die Fig. 2 zeigt die Linearführung 1 in einer perspektivischen Darstellung. Der Innenkörper 2 und die beiden Außenkörper 3, 4 sind beispielsweise aus Metall gefertigt und die Außenkörper 3, 4 weisen eine Länge 1 auf.

Die Linearführung 1 weist außerdem erste Wälzkörper 5 und zweite Wälzkörper 6 auf, die im Falle des vorliegenden Ausführungsbeispiels kugelförmig ausgebildet sind. Die Wälzkörper 5, 6 können jedoch andere Formen aufweisen, können beispielsweise rollen- bzw. tonnenförmig ausgebildet sein.

Die ersten Wälzkörper 5 sind zwischen dem ersten Außenkörper 3 und dem Innenkörper 2 in einem Spalt 11 angeordnet und wälzen demnach sowohl auf dem Innenkörper 2 als auch auf dem ersten Außenkörper 3 in dafür vorgesehenen, in Richtung der Längsausdehnung des Innenkörpers 2 bzw. des ersten Außenkörpers 3 sich erstreckenden Nuten 7, 8. Die Nuten 7, 8 sind im Falle des vorliegenden Ausführungsbeispiels etwa halbkreiszylinderförmig ausgeführt, um die kugelförmigen ersten Wälzkörper 5 führend aufzunehmen. Außerdem sind die ersten Wälzkörper 5 in einem dafür vorgesehenen, der Übersicht halber nicht dargestellten und allgemein bekannten Wälzkäfig gehalten.

Die zweiten Wälzkörper 6 sind zwischen dem zweiten Außenkörper 4 und dem Innenkörper 2 in einem Spalt 12 angeordnet und wälzen demnach sowohl auf dem Innenkörper 2 als auch auf dem zweiten Außenkörper 4 in dafür vorgesehenen, in Richtung der Längsausdehnung des Innenkörpers 2 bzw. des zweiten Außenkörpers 4 sich erstreckenden Nuten 9, 10. Die Nuten 9, 10 sind im Falle des vorliegenden Ausführungsbeispiels etwa halbkreiszylinderförmig ausgeführt, um die kugelförmigen zweiten Wälzkörper 6 führend aufzunehmen. Außerdem sind die zweiten Wälzkörper 6 in einem dafür vorgesehenen, der Übersicht halber nicht dargestellten und allgemein bekannten Wälzkäfig gehalten.

Somit sind die beiden Außenkörper 3, 4 längs ihrer Längsausdehnung in Richtung eines Pfeils 13 relativ zum Innenkörper 2 verschiebbar.

Im Falle des vorliegenden Ausführungsbeispiels weist die Linearführung 1 ein Federprofil bzw. eine vorgespannte Klammer 14 auf, die z.B. aus Metall, insbesondere aus Aluminium oder Stahl gefertigt ist. Die Klammer 14 wurde z.B. aus einem Federblech der Dicke 0,75mm - 1,00 mm durch Biegen und anschließendem Härten hergestellt und ist über die Außenkörper 3, 4 und dem Innenkörper 2 gestülpt.

Im Falle des vorliegenden Ausführungsbeispiels weist die Klammer 14 einen Federbügel 15 auf, an dessen Enden jeweils ein Federschenkel 16, 17 sich anschließt. Der Federbügel 15 erstreckt sich im Wesentlichen über die Breite b der Linearführung 1.

Die Federschenkel 16, 17 sind im Wesentlichen in einem rechten Winkel zum Federbügel 15 ausgerichtet und sind derart vorgespannt, dass sie mit ihren freien Enden 18, 19 gegen die dem Innenkörper 2 abgewandten Außenseiten 20, 21 der Außenkörper 3, 4 drücken. Somit drücken die Federschenkel 16, 17 mit ihren freien Enden 18, 19 die beiden Außenkörper 3, 4 seitlich gegen die relevanten Wälzkörper 5, 6, wodurch die Linearvorrichtung 1 auch im unmontierten Zustand zusammengehalten wird.

Im Falle des vorliegenden Ausführungsbeispiels sind die freien Enden 18, 19 der Federschenkel 16, 17 wulstartig ausgeführt und drücken in etwa mittig gegen die Außenkörper 3, 4 bezogen auf deren Höhe h.

Um z.B. ein Abspringen oder Verrutschen der Klammer 14 zu verhindern, sind im Falle des vorliegenden Ausführungsbeispiels in den Seitenwänden 20, 21 der Außenkörper 3, 4 Nuten 22, 23 eingelassen, die sich entlang der Länge 1 der Außenkörper 3, 4 beispielsweise auf halber Höhe erstrecken. Die wulstartigen freien Enden 18, 19 der Federschenkel 16, 17 sind mit den Nuten 22, 23 verhakt. Die Klammer 14 hat beispielsweise eine Länge von etwa 1,2 m bis 1,3 m.

Im Falle des vorliegenden Ausführungsbeispiels erstreckt sich die Klammer 14 bzw. deren Federbügel 15 im Wesentlichen entlang der gesamten Länge 1 der Außenkörper 3, 4, wie dies in der Fig. 2 zu sehen ist.

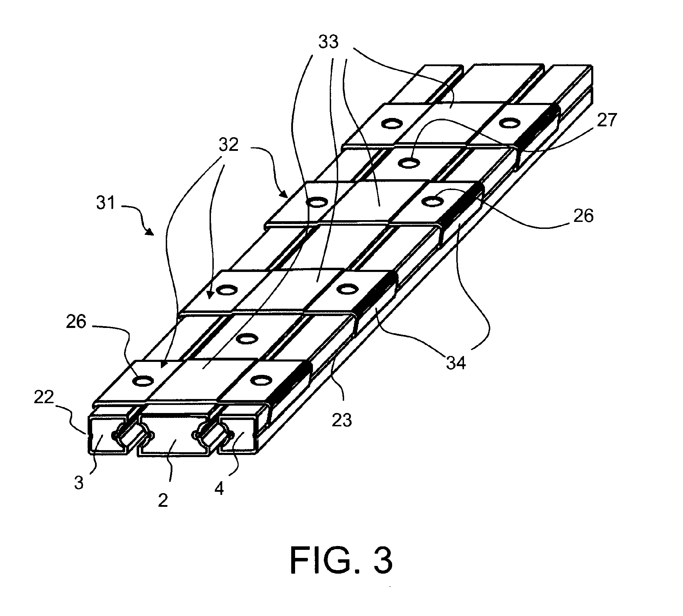

Die Fig. 3 zeigt eine weitere Linearführung 31. Wenn nicht anders beschrieben, dann sind Bestandteile der in der Fig. 3 gezeigten Linearführung 31, die mit Bestandteilen der in den Figuren 1 und 2 gezeigten Linearführung 1 im Wesentlichen bau- und funktionsgleich sind, mit denselben Bezugszeichen versehen.

Die in der Fig. 3 gezeigte Linearführung 31, die in der Fig. 3 in einer perspektivischen Darstellung nur teilweise gezeigt ist, unterscheidet sich im Wesentlichen von der Linearführung 1 der Figuren 1 und 2 dadurch, dass diese anstelle der einzigen Klammer 14 mehrere Klammern 32 aufweist, die jeweils einen Federbügel 33 entsprechend dem Federbügel 15 und zwei Federschenkel 34 entsprechend den Federschenkeln 16, 17 aufweisen.

Im Falle des vorliegenden Ausführungsbeispiels erstrecken sich die Klammern 32 zusammen über die gesamte Länge 1 der Außenkörper 4, 5 und sind äquidistant hintereinander bzw. nebeneinander angeordnet. Die Klammern 32 brauchen aber nicht notwendigerweise äquidistant voneinander beabstandet zu sein und brauchen sich auch nicht notwendigerweise über die gesamte Länge 1 der Außenkörper 3, 4 zu erstrecken.

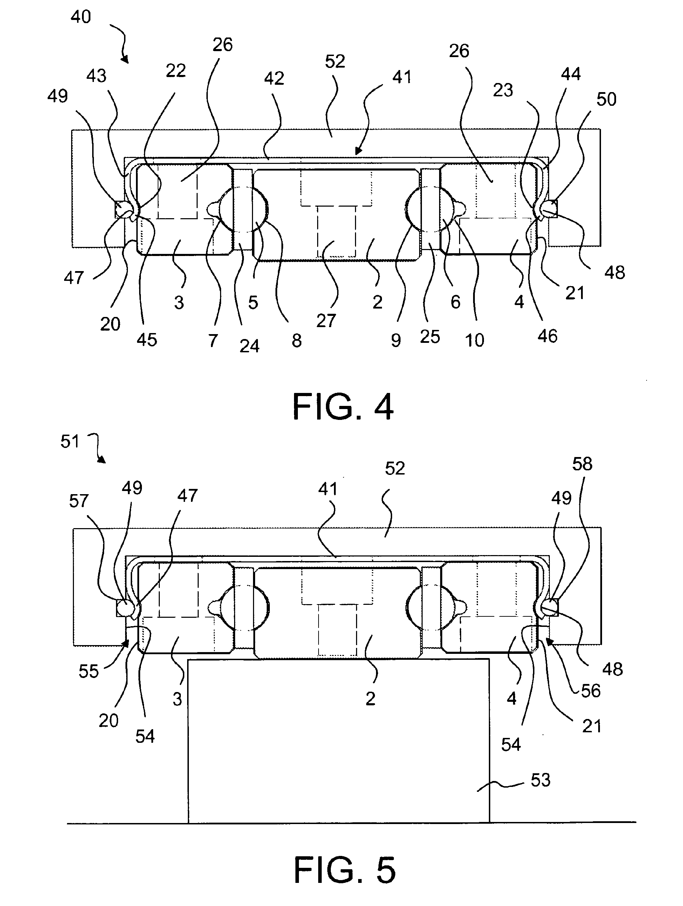

Die Fig. 4 zeigt eine Linearführung 40 gemäß der Erfindung. Wenn nicht anders beschrieben, dann sind Bestandteile der in der Fig. 4 gezeigten Linearführung 40, die mit Bestandteilen der in den Figuren 1 bis 3 gezeigten Linearführungen 1, 31 im Wesentlichen bau- und funktionsgleich sind, mit denselben Bezugszeichen versehen.

Die in der Fig. 4 gezeigte Linearführung 40 unterscheidet sich im Wesentlichen von den in den Figuren 1 bis 3 gezeigten Linearführungen 1, 31 durch ihre Klammer 41, die die Außenkörper 3, 4 seitlich gegen die Wälzkörper 5, 6 drückt. Außerdem zeigt die Fig. 4 Wälzkäfige 24, 25, die die Wälzkörper 5, 6 aufnehmen.

Die Linearführung 40 kann eine einzige Klammer 41 ähnlich der Klammer 14 der Linearführung 1 oder mehrere Klammern ähnlich der Klammern 32 der Linearführung 31 aufweisen.

Die Klammer 41, die z.B. aus einem Federblech beispielsweise aus Aluminium oder Stahl gefertigt ist, weist ähnlich der Klammer 14 einen Federbügel 42 und vorgespannte Federschenkel 43, 44 auf, die mit ihren freien Enden 45, 46 seitlich gegen die Außenkörper 3, 4 drücken.

Im Falle des vorliegenden Ausführungsbeispiels sind die freien Enden 45, 46 jedoch nicht wulstartig ausgeführt, sondern sie sind in Höhe der in den Außenseiten 20, 21 der Außenkörper 3, 4 eingelassenen Nuten 22, 23 konvex in Richtung dieser Außenseiten 20, 21 gebogen, damit die freien Enden 45, 46 mit den Nuten 22, 23 verrasten können. Aufgrund dieser Ausgestaltung bilden sich auf den den Außenkörpern 3, 4 abgewandten Seiten der freien Enden 45, 46 der Federschenkel 43, 44 konkavförmige Aufnahmen 47, 48, die sich entlang der Längsausdehnung der Außenkörper 3, 4 auf Höhe der Nuten 22, 23 erstrecken. Die Aufnahmen 47, 48 weisen im Falle des vorliegenden Ausführungsbeispiels eine im Wesentlichen kreissegmentartige Form auf und sind dafür vorgesehen, als Drähte 49, 50 ausgebildete Fixiervorrichtungen aufzunehmen, deren Funktionalität weiter unten beschrieben wird.

Die Linearführungen 1, 31, 40 sind z.B. vorgesehen, Teil eines in der Fig. 5 dargestellten Lineartisches, insbesondere einer Patientenliege 51 zu sein, dessen Tischplatte 52 längs seiner Längsachse verschieblich gelagert ist. Zu diesem Zweck kann z.B. die Tischplatte 52 an den Außenkörpern 3, 4 beispielsweise mittels Schrauben befestigt werden. Um solche Schrauben aufzunehmen, umfassen im Falle des vorliegenden Ausführungsbeispiels die Außenkörper 3, 4 Bohrungen 26, die auch durch die Klammer 14, 41 bzw. den Klammern 32 durchgeführt sind. Eine Befestigungsvorrichtung 53 der Patientenliege 51 kann mit dem Innenkörper 2 mittels Bohrungen 27 desselben verschraubt werden, sodass die Tischplatte 52 entlang der Längsausdehnung der Linaerführungen 1, 31, 40 verschoben werden kann.

Im Falle des vorliegenden Ausführungsbeispiels ist die Tischplatte 52 seitlich über die beiden Außenkörper 3, 4 gestülpt, sodass zwischen den Außenseiten 20, 21 der Außenkörper 3, 4 und der diesen Außenseiten 20, 21 zugewandten Seite 54 der Tischplatte 52 jeweils ein Spalt 55, 56 entsteht. Des Weiteren weist die Tischplatte 52 auf Höhe der Nuten 22, 23 der Außenkörper 3, 4 in Längsrichtung der Tischplatte 52 verlaufende Nuten 57, 58 auf, in denen die Drähte 49, 50 angeordnet sind. Die Durchmesser der Drähte 49, 50 und die Spaltbreite der Spalte 55, 56 sind dabei derart gewählt, dass die Drähte 49, 50, die ebenfalls in den Aufnahmen 47, 48 der Federschenkel 43, 44 geführt sind, seitlich gegen die Federschenkel 43, 44 auf Höhe der Nuten 22, 23 der Außenkörper 3, 4 drücken. Dadurch wird die Klammer 41 fixiert.

Um die Patientenliege 51 im Falle des vorliegenden Ausführungsbeispiels zu Montieren, wird zunächst die Linearführung 40 mit ihrer Klammer 41 geliefert und anschließend wird die Befestigungsvorrichtung 53 mit dem Innenkörper 2 und die Tischplatte 52 mit den Außenkörpern 3, 4 verschraubt. Anschließend werden die Drähte 49, 50 als Sicherheitsfunktion in die Nuten 57, 58 bzw. den Aufnahmen 47, 48 eingeführt.

### Bezugszeichenliste

- 1: Linearführung,
- 2: Innenkörper
- 3, 4: Außenkörper
- 5,6: Wälzkörper
- 7-10: Nut

- 11, 12: Spalt
- 13: Pfeil
- 14: Klammer
- 15: Federbügel
- 16, 17: Federschenkel
- 18, 19: freie Ende

- 20, 21: Außenseite
- 22, 23: Nut
- 24, 25: Wälzkäfig
- 26,27: Bohrungen

- 31: Linearführung
- 32: Klammern
- 33: Federbügel
- 34: Federschenkel
- 40: Linearführung,
- 41: Klammer
- 42: Federbügel
- 43, 44: Federschenkel
- 45, 46: freie Ende
- 47, 48: Aufnahme
- 49, 50: Draht

- 51: Patientenliege
- 52: Tischplatte
- 53: Befestigungsvorrichtung
- 54: Seite
- 55, 56: Spalt
- 57, 58: Nut

- b: Breite
- h: Höhe
- 1: Länge

## Patentansprüche

1. Linearführung, aufweisend einen Innenkörper (2), einen ersten Außenkörper (3), einen zweiten Außenkörper (4), zwischen dem Innenkörper (2) und dem ersten Außenkörper (3) angeordnete erste Wälzkörper (5), zwischen dem Innenkörper (2) und dem zweiten Außenkörper (4) angeordnete zweite Wälzkörper (6) und wenigstens eine vorgespannte Klammer (14, 32, 41), die die beiden Außenkörper (3, 4) seitlich gegen die relevanten Wälzkörper (5, 6) drückt, wobei die wenigstens eine Klammer (41) eine auf ihrer dem ersten Außenkörper (3) abgewandten Seite in Richtung der Längsausdehnung des ersten Außenkörpers (3) sich erstreckende erste Aufnahme (47) aufweist, die eingerichtet ist, eine längliche, erste Fixiervorrichtung (49) aufzunehmen, und/oder die eine auf ihrer dem zweiten Außenkörper (4) abgewandten Seite in Richtung der Längsausdehnung des zweiten Außenkörpers (4) sich erstreckende zweite Aufnahme (48) aufweist, die eingerichtet ist, eine längliche, zweite Fixiervorrichtung (50) aufzunehmen.

2. Linearführung nach Anspruch 1, deren wenigstens eine Klammer (14, 32, 41) einen sich über die Breite (b) der Linearführung (1, 31, 40) erstreckenden Bügel (15, 33, 42) und zwei, rechtwinklig zum Bügel (15, 33, 42) ausgerichtete Federschenkel (16, 17, 34, 43, 44) umfasst, die die Außenkörper (3, 4) seitlich umgreifen und in Richtung der Außenseiten (20, 21) der Außenkörper (2, 4) vorgespannt sind.

3. Linearführung nach Anspruch 1 oder 2, die genau eine vorgespannte Klammer (14, 41) aufweist, die die beiden Außenkörper (3, 4) seitlich gegen die Wälzkörper (5, 6) drückt.

4. Linearführung nach Anspruch 3, deren Klammer (14, 41) sich über die gesamte Länge (1) der beiden Außenkörper (3, 4) erstreckt.

5. Linearführung nach Anspruch 1 oder 2, die mehrere Klammern (32) aufweist, die die beiden Außenkörper (3, 4) seitlich gegen die Wälzkörper (5, 6) drücken.

6. Linearführung nach Anspruch 5, deren Klammern (32) entlang der Längsausdehnung der Außenkörper (3, 4) hintereinander angeordnet sind, äquidistant voneinander beabstandet sind und/oder sich zusammen über die gesamte Länge (1) der beiden Außenkörper (3, 4) erstrecken.

7. Linearführung nach einem der Ansprüche 1 bis 6, deren wenigstens eine Klammer (14, 32, 41) als ein Federblech ausgeführt ist, das insbesondere aus Stahl oder Aluminium ausgeführt ist.

8. Linearführung nach einem der Ansprüche 1 bis 7, bei der wenigstens einer der Außenkörper (3, 4) auf seiner nach außen gerichteten Außenfläche (20, 21) wenigstens eine Vertiefung aufweist, in die die wenigstens eine Klammer (14, 32, 41) eingerastet ist.

9. Linearführung nach Anspruch 8, bei der die Vertiefung als eine längs der Längsausdehnung des relevanten Außenkörpers (3, 4) sich erstreckende Nut (22, 23) ausgebildet ist, und/oder die wenigstens eine Klammer (14, 32, 41) mit einem freien Ende (18, 19, 45, 46) in die Vertiefung eingerastet ist.

10. Linearführung nach einem der Ansprüche 1 bis 9, bei der die erste Aufnahme (47) in dem Bereich, in dem die Klammer (41) gegen den ersten Außenkörper (3) drückt, angeordnet ist, die erste Fixiervorrichtung (49) kreiszylinderförmig ausgeführt ist, die zweite Aufnahme (48) in dem Bereich, in dem die Klammer (41) gegen den zweiten Außenkörper (4) drückt, angeordnet ist, und/oder die zweite Fixiervorrichtung (50) kreiszylinderförming ausgeführt ist.

11. Lineartisch, aufweisend eine Linearführung (1, 31, 40) nach einem der Ansprüche 1 bis 10, eine an dem Innenkörper (2) befestigte Befestigungsvorrichtung (53) und eine an den Außenkörpern (3, 4) befestigte Tischplatte (52).

12. Lineartisch nach Anspruch 11, dessen Tischplatte (52) zumindest teilweise seitlich über wenigstens einen der Außenkörper (3, 4) gestülpt ist und zwischen dem über den relevanten Außenkörper (3, 4) gestülpten Teil der Tischplatte (52) und der Klammer (41) die relevante der ersten und/oder zweiten Fixiervorrichtung (49, 50) eingeklemmt ist.

13. Lineartisch nach Anspruch 12, bei dem der über den relevanten Außenkörper (3, 4) gestülpte Teil der Tischplatte (52) eine in Richtung der Längsausdehnung des relevanten Außenkörpers (3, 4) sich erstreckende, in der dem relevanten Außenkörper (3, 4) zugewandten Seite (54) der Tischplatte (52) angeordnete Aufnahme aufweist, die die relevante der ersten und/oder zweiten Fixiervorrichtung (49, 50) aufnimmt und insbesondere als eine Nut (57, 58) ausgebildet ist.

14. Verfahren zum Montieren eines Lineartisches (51) gemäß einem der Ansprüche 11 bis 13, aufweisend den Verfahrensschritt des Befestigen des Innenkörpers (2) an der Befestigungsvorrichtung (53) und Befestigen der Tischplatte (52) an den Außenkörpern (3, 4).

15. Verfahren nach Anspruch 14, zusätzlich aufweisend den folgenden Verfahrensschritt: Einführen der länglichen ersten Fixiervorrichtung (49) zwischen der Tischplatte (52) und dem Teil der Klammer (41), der gegen den ersten Außenkörper (3) drückt und/oder Einführen der länglichen zweiten Fixiervorrichtung (50) zwischen der Tischplatte (52) und dem Teil der Klammer (41), der gegen den zweiten Außenkörper (4) drückt.

## Claims

1. Linear guide, having an inner body (2), a first outer body (3), a second outer body (4), first rolling bodies (5) arranged between the inner body (2) and the first outer body (3), second rolling bodies (6) arranged between the inner body (2) and the second outer body (4), and at least one prestressed clamp (14, 32, 41) which presses the two outer bodies (3, 4) laterally against the relevant rolling bodies (5, 6), the at least one clamp (41) having a first receptacle (47) which extends, on its side facing away from the first outer body (3), in the direction of longitudinal extent of the first outer body (3) and which is designed for receiving an elongate first fixing device (49), and/or having a second receptacle (48) which extends, on its side facing away from the second outer body (4), in the direction of longitudinal extent of the second outer body (4) and which is designed for receiving an elongate second fixing device (50).

2. Linear guide according to Claim 1, of which at least one clamp (14, 32, 41) comprises a stirrup piece (15, 33, 42) extending over the width (b) of the linear guide (1, 31, 40) and two spring legs (16, 17, 34, 43, 44) which are oriented at right angles to the stirrup piece (15, 33, 42) and which surround the outer bodies (3, 4) laterally and are pre-stressed in the direction of the outsides (20, 21) of the outer bodies (2, 4).

3. Linear guide according to Claim 1 or 2, which has exactly one pre-stressed clamp (14, 41) which presses the two outer bodies (3, 4) laterally against the rolling bodies (5, 6).

4. Linear guide according to Claim 3, of which the clamp (14, 41) extends over the entire length (1) of the two outer bodies (3, 4).

5. Linear guide according to Claim 1 or 2, which has a plurality of clamps (32) which press the two outer bodies (3, 4) laterally against the rolling bodies (5, 6).

6. Linear guide according to Claim 5, of which the clamps (32) are arranged one behind the other along the longitudinal extent of the outer bodies (3, 4), are spaced equidistantly apart from one another and/or extend together over the entire length (1) of the two outer bodies (3, 4).

7. Linear guide according to one of Claims 1 to 6, of which at least one clamp (14, 32, 41) is designed as a spring plate which is produced, in particular, from steel or aluminium.

8. Linear guide according to one of Claims 1 to 7, in which at least one of the outer bodies (3, 4) has, on its outer face (20, 21) directed outwards, at least one depression, into which the at least one clamp (14, 32, 41) is latched.

9. Linear guide according to Claim 8, in which the depression is designed as a groove (22, 23) extending along the longitudinal extent of the relevant outer body (3, 4), and/or the at least one clamp (14, 32, 41) is latched with a free end (18, 19, 45, 46) into the depression.

10. Linear guide according to one of Claims 1 to 9, in which the first receptacle (47) is arranged in the region in which the clamp (41) presses against the first outer body (3), the first fixing device (49) is of circular-cylindrical design, the second receptacle (48) is arranged in the region in which the clamp (41) presses against the second outer body (4), and/or the second fixing device (50) is of circular-cylindrical design.

11. Linear bench, having a linear guide (1, 31, 40) according to one of Claims 1 to 10, a fastening device (53) fastened to the inner body (2), and a bench top (52) fastened to the outer bodies (3, 4).

12. Linear bench according to Claim 11, of which the bench top (52) is at least partially slipped laterally over at least one of the outer bodies (3, 4), and the relevant fixing device of the first and/or second fixing devices (49, 50) is clamped between that part of the bench top (52) which is slipped over the relevant outer body (3, 4) and the clamp (41).

13. Linear bench according to Claim 12, in which that part of the bench top (52) which is slipped over the relevant outer body (3, 4) has a receptacle which extends in the direction of longitudinal extent of the relevant outer body (3, 4) and is arranged in that side (54) of the bench top (52) facing the relevant outer body (3, 4) and which receives the relevant fixing device of the first and/or second fixing devices (49, 50) and is designed, in particular, as a groove (57, 58).

14. Method for mounting a linear bench (51) according to one of Claims 11 to 13, having the method step of fastening the inner body (2) to the fastening device (53) and of fastening the bench top (52) to the outer bodies (3, 4).

15. Method according to Claim 14, additionally having the following method step: introduction of the elongate first fixing device (49) between the bench top (52) and that part of the clamp (41) which presses against the first outer body (3), and/or introduction of the elongate second fixing device (50) between the bench top (52) and that part of the clamp (41) which presses against the second outer body (4).

## Revendications

1. Guidage linéaire, présentant un corps interne (2), un premier corps externe (3), un deuxième corps externe (4), des premiers corps de roulement (5) disposés entre le corps interne (2) et le premier corps externe (3), des deuxièmes corps de roulement (6) disposés entre le corps interne (2) et le deuxième corps externe (4) et au moins une pince précontrainte (14, 32, 41) qui presse les deux corps externes (3, 4) latéralement contre les corps de roulement concernés (5, 6), l'au moins une pince (41) présentant un premier logement (47) s'étendant sur son côté opposé au premier corps externe (3) dans la direction de l'étendue longitudinale du premier corps externe (3), lequel premier logement est prévu pour recevoir un premier dispositif de fixation allongé (49) et/ou présente un deuxième logement (48) s'étendant sur son côté opposé au deuxième corps externe (4) dans la direction de l'étendue longitudinale du deuxième corps externe (4), lequel deuxième logement est prévu pour recevoir un deuxième dispositif de fixation allongé (50).

2. Guidage linéaire selon la revendication 1, dont au moins une pince (14, 32, 41) comprend un étrier (15, 33, 42) s'étendant sur la largeur (b) du guidage linéaire (1, 31, 40) et deux branches de ressort (16, 17, 34, 43, 44) orientées à angle droit par rapport à l'étrier (15, 33, 42), qui viennent en prise latéralement autour des corps externes (3, 4) et sont précontraintes dans la direction des côtés externes (20, 21) des corps externes (2, 4).

3. Guidage linéaire selon la revendication 1 ou 2, lequel présente exactement une pince précontrainte (14, 41) qui presse les deux corps externes (3, 4) latéralement contre les corps de roulement (5, 6).

4. Guidage linéaire selon la revendication 3, dont la pince (14, 41) s'étend sur toute la longueur (1) des deux corps externes (3, 4).

5. Guidage linéaire selon la revendication 1 ou 2, lequel présente plusieurs pinces (32) qui pressent les deux corps externes (3, 4) latéralement contre les corps de roulement (5, 6).

6. Guidage linéaire selon la revendication 5, dont les pinces (32) sont disposées les unes derrière les autres le long de l'étendue longitudinale des corps externes (3, 4), sont espacées les unes des autres de manière équidistante et/ou s'étendent ensemble sur toute la longueur (1) des deux corps externes (3, 4).

7. Guidage linéaire selon l'une quelconque des revendications 1 à 6, dont au moins une pince (14, 32, 41) est réalisée sous forme de tôle à ressort, qui est réalisée notamment en acier ou en aluminium.

8. Guidage linéaire selon l'une quelconque des revendications 1 à 7, dans lequel au moins l'un des corps externes (3, 4) présente sur sa surface externe (20, 21) orientée vers l'extérieur au moins un renfoncement dans lequel est encliquetée l'au moins une pince (14, 32, 41).

9. Guidage linéaire selon la revendication 8, dans lequel le renfoncement est réalisé sous la forme d'une rainure (22, 23) s'étendant le long de l'étendue longitudinale du corps externe concerné (3, 4), et/ou l'au moins une pince (14, 32, 41) est encliquetée avec une extrémité libre (18, 19, 45, 46) dans le renfoncement.

10. Guidage linéaire selon l'une quelconque des revendications 1 à 9, dans lequel le premier logement (47) est disposé dans la région dans laquelle la pince (41) presse contre le premier corps externe (3), le premier dispositif de fixation (49) est réalisé sous forme cylindrique circulaire, le deuxième logement (48) est disposé dans la région dans laquelle la pince (41) presse contre le deuxième corps externe (4), et/ou le deuxième dispositif de fixation (50) est réalisé sous forme cylindrique circulaire.

11. Table linéaire présentant un guidage linéaire (1, 31, 40) selon l'une quelconque des revendications 1 à 10, un dispositif de fixation (53) fixé au corps interne (2) et une plaque de table (52) fixée aux corps externes (3, 4).

12. Table linéaire selon la revendication 11, dont la plaque de table (52) est emboutie au moins en partie latéralement par-dessus au moins l'un des corps externes (3, 4), et entre la partie emboutie par-dessus le corps externe concerné (3, 4) de la plaque de table (52) et la pince (41) est serré le premier et/ou le deuxième dispositif de fixation (49, 50) concerné.

13. Table linéaire selon la revendication 12, dans laquelle la partie de la plaque de table (52) emboutie par-dessus le corps externe concerné (3, 4) présente un logement s'étendant dans la direction de l'étendue longitudinale du corps externe concerné (3, 4), disposé dans le côté (54) de la plaque de table (52) tourné vers le corps externe concerné (3, 4), qui reçoit le premier et/ou le deuxième dispositif de fixation concerné (49, 50) et qui est réalisé notamment sous forme de rainure (57, 58).

14. Procédé de montage d'une table linéaire (51) selon l'une quelconque des revendications 11 à 13, présentant l'étape de procédé de fixation du corps interne (2) au dispositif de fixation (53) et de fixation de la plaque de table (52) aux corps externes (3, 4).

15. Procédé selon la revendication 14, présentant en outre l'étape de procédé suivante : introduction du premier dispositif de fixation allongé (49) entre la plaque de table (52) et la partie de la pince (41) qui presse contre le premier corps externe (3) et/ou introduction du deuxième dispositif de fixation allongé (50) entre la plaque de table (52) et la partie de la pince (41) qui presse contre le deuxième corps externe (4).
